# FASCICULE DE BREVET EUROPEEN

(11) **EP 0 526 369 B1**
(45) Date de publication et mention de la délivrance du brevet: **06.09.1995**
(21) Numéro de dépôt: 92440092.2
(22) Date de dépôt: 29.07.1992
(51) Int. Cl.: B29C 43/22, B29D 28/00, B29C 43/24

(54) **Procédé de fabrication d'un produit thermocollant et dispositif pour la mise en oeuvre de ce procédé.**
Verfahren und Vorrichtung zur Herstellung eines Heissschmelzproduktes.
Method and apparatus for the production of a hot melt product.

(30) Priorité: 30.07.1991 FR 9109844
(43) Date de publication de la demande: 03.02.1993
(73) Titulaire: PROTECHNIC, S.A., 68700 Cernay (FR)
(72) Inventeur:
(74) Mandataire: Nuss, Pierre

(56) Documents cités:
- EP-A- 0 301 599
- EP-A- 0 447 595
- FR-A- 1 246 923
- FR-A- 1 474 145
- US-A- 3 746 607
- US-A- 4 323 533
- US-A- 4 507 351

## Description

La présente invention concerne le domaine de la fabrication de produits thermofusibles et a pour objet un procédé de fabrication d'un produit thermocollant.

L'invention a également pour objet un dispositif pour la mise en oeuvre de ce procédé, ainsi que le produit obtenu.

Il existe actuellement des grilles thermocollantes sous forme de bandes ou de nappes, utilisables notamment dans le domaine de l'industrie textile, en particulier pour le collage ou le renforcement, et qui sont généralement montées sur des supports de transfert. Ces supports de transfert sont constitués par du papier, dont la face tournée vers la grille est pourvue d'un revêtement en silicone formant une face de faible adhérence favorisant le transfert de la grille thermocollante sur le tissus sous l'effet de la chaleur et de la pression.

Ces nappes ou bandes de matière thermocollante permettent, du fait de leur poids de colle par unité de surface relativement faible et de leur structure en grille, un collage des matériaux textiles préservant leurs propriétés de souplesse initiales.

Toutefois, ces nappes ou bandes connues présentent l'inconvénient, lors de leur fabrication, de nécessiter le déroulement simultané d'une bande de papier siliconé formant support, ce qui complique d'autant le procédé de fabrication par addition d'opérations supplémentaires, d'où il résulte également une augmentation du prix de revient des nappes obtenues.

En outre, ces modes de réalisation connus, du fait de l'utilisation d'un papier siliconé, aboutissent à l'obtention, pour une surface totale de nappe donnée pour une bobine, à un volume et à un poids importants relativement à ladite surface de nappe ou de bande.

De plus, lors de la mise en oeuvre des nappes ou bandes connues, il est nécessaire, après leur application sous pression et à chaud, d'arracher et d'éliminer le papier siliconé de support, ce qui entraîne des opérations supplémentaires, souvent manuelles, et, en conséquence, une augmentation du temps de main d'oeuvre et donc un coût de mise en oeuvre élevé.

La présente invention a pour but de pallier ces inconvénients.

Elle a, en effet, pour objet un procédé de fabrication d'un produit thermocollant caractérisé en ce qu'il consiste essentiellement à extruder une masse thermofusible et à la racler à l'état fondu sur un cylindre gravé régulé en température entre environ 120°C et 250°C, à calandrer ladite masse au moyen de ce cylindre et d'un cylindre élastomérique de silicone, tout en la transférant sur ledit cylindre élastomérique, qui réalise simultanément une consolidation du produit par refroidissement, à transférer ensuite le produit, soit sur une bande transporteuse et à l'amener au moyen de cette dernière, après passage dans des zones de traitement thermique, à un module d'enroulage, soit directement, sous forme de structure continue ou discontinue, sur un support d'utilisation finale ou de transfert.

L'invention a également pour objet un dispositif pour la mise en oeuvre de ce procédé caractérisé en ce qu'il est essentiellement constitué par un cylindre gravé coopérant avec un cylindre élastomérique de calandrage et de transfert, par une bande transporteuse, par un poste de traitement thermique du produit et par un module d'enroulage.

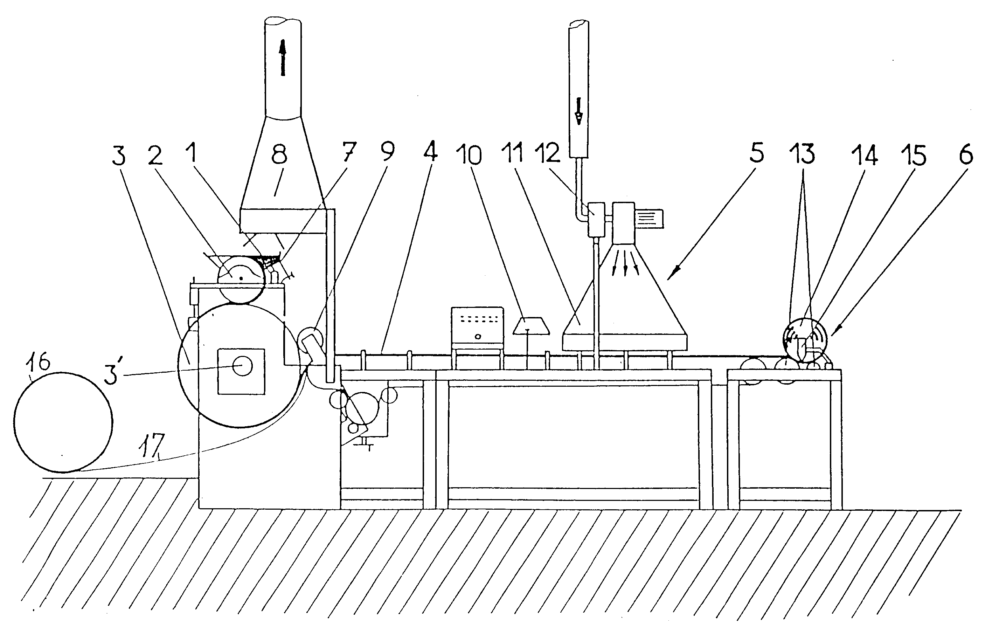

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en élévation latérale du dispositif pour la mise en oeuvre du procédé conforme à l'invention.

Comme le montre, à titre d'exemple, le dessin annexé, le procédé de fabrication d'un produit thermocollant consiste essentiellement à extruder une masse thermofusible 1 et à la racler à l'état fondu sur un cylindre gravé 2 régulé en température entre environ 120°C et 250°C, à calandrer ladite masse au moyen de ce cylindre 2 et d'un cylindre élastomérique de silicone 3, tout en la transférant sur ledit cylindre élastomérique 3, qui réalise simultanément une consolidation du produit par refroidissement.

Ce produit est transféré ensuite, soit sur une bande transporteuse 4 et est amené au moyen de cette dernière, après passage dans des zones de traitement thermique, en particulier un poste de traitement thermique 5, à un module d'enroulage 6, soit directement, sous forme de structure continue ou discontinue, sur un support d'utilisation finale ou de transfert. Un support d'utilisation finale peut, notamment, se présenter sous forme d'un support sensible à la forte chaleur du cylindre gravé, tel que les tissés ou les non tissés, qui doivent être utilisés directement sans transfert et qui risqueraient d'être altérés par la forte chaleur. En outre, par le terme structure discontinue sont désignées toutes formes de réalisation possibles du produit thermocollant autre qu'une réalisation en bande, à savoir une disposition par points, par plots, ou par tous autres éléments de forme géométrique quelconque non reliés entre eux.

Il est, bien entendu, également possible de disposer le produit thermocollant sur un support de transfert tel qu'un film plastique ou un papier siliconé, pour certaines utilisations particulières.

Le cylindre gravé 2 forme avec le cylindre élastomérique de silicone 3 une calandre haute pression, qui réalise, en outre, le transfert de la masse formée par la gravure d'un cylindre à l'autre.

Le cylindre 3 réalise, en outre, une consolidation du produit par refroidissement afin de faciliter son détachage et le transfert sur la bande transporteuse 4.

Le polymère en fusion est réparti dans les gravures du cylindre 2 au moyen d'une racle 7 et le cylindre élastomérique 3 refroidi est monté sur un palier mobile 3' déplaçable sous l'action de vérins ou de dispositifs mécaniques à excentrique, ou autres dispositifs de réglage de position (non représentés) en direction du cylindre gravé 2, une hotte 8 surmontant l'ensemble et aspirant les vapeurs de polymères.

Ainsi, le polymère en fusion est raclé contre le cylindre gravé 2, dont il remplit toutes les gravures et, grâce à la pression du cylindre élastomérique 3 sur le cylindre gravé 2, ainsi qu'au refroidissement opéré par ledit cylindre 3, la gravure du cylindre 2 sur le cylindre élastomérique 3 forme la grille à obtenir. Un tel produit peut être obtenu grâce aux propriétés du revêtement utilisé qui, du fait de son élasticité, permet de fortes pressions rendant possible le dépôt d'un produit en forme de grille, ou de toutes autres structures, sur le cylindre élastomérique 3. En outre, la tenue en température de l'élastomère évite le vieillissement du cylindre 3.

Au niveau du transfert entre le cylindre élastomérique 3 et la bande transporteuse 4 il est prévu, en outre, un cylindre 9 de léchage du cylindre élastomérique 3. Ce cylindre 9 est destiné à favoriser le décollement du produit transféré par le cylindre 3, dudit cylindre 3.

Selon une caractéristique de l'invention, la bande transporteuse 4 est avantageusement pourvue d'un revêtement rugueux présentant des poils inclinés dans le sens de marche de la bande 4. Un tel revêtement favorise l'accrochage du produit en forme de grille obtenu et évite son glissement.

Le transfert du produit en forme de grille obtenu sur la bande transporteuse 4 est réalisé, lors de la phase de démarrage de la fabrication, par collage d'une bande de papier sur le début de la bande de produit, afin de permettre un pincement de ce début de bande entre le cylindre de léchage 9 et la bande transporteuse 4, puis le transfert sur ladite bande 4.

Il est également possible de réaliser une enduction préalable du cylindre élastomérique 3 sur la moitié de sa périphérie, puis d'amorcer le décollement du produit en forme de grille sur une certaine longueur, de réaliser une nouvelle enduction sur une partie du produit en forme de grille afin de former un raccord et, enfin, grâce à l'amorce de décollement, de transférer le produit sur la bande 4.

Le poste de traitement thermique 5 est constitué par un dispositif d'insolation à infrarouges 10 et par un ensemble 11 de ventilation refroidi au moyen d'une installation de circulation d'eau 12.

Pour les produits à cristallisation lente, lors du transfert du produit en forme de grille sur la bande transporteuse 4, ledit produit, d'une part, est étiré et, d'autre part, se trouve dans un état dit de structure amorphe, c'est-à-dire qu'il n'a pas encore retrouvé une structure stable sur le plan moléculaire, n'ayant pas atteint une température suffisamment basse pour être en structure cristalline.

Ceci aurait pour conséquence une cristallisation après le bobinage entraînant un retrait en longueur de l'ordre de 20 % et un tac, c'est-à-dire un collage a la pression à froid, important occasionnant un déroulage délicat de la bobine.

A cet effet, le dispositif d'insolation à infrarouges 10 est destiné à amener la température du produit en forme de grille à son point de transition vitreuse afin d'assurer sa stabilité dimensionnelle et de bloquer le retrait de la matière, l'ensemble 11 de ventilation limitant le tac par un refroidissement brusque.

Dans le cas du transfert du produit directement sur un support d'utilisation finale ou de transfert, le dispositif est complété par un moyen de déroulage 16 monté en amont des cylindres 2 et 3 et déroulant un support 17 d'utilisation finale ou de transfert sous le cylindre élastomérique de silicone 3 en amont de la bande transporteuse 4, le support 17 ainsi chargé pouvant être enroulé sur le module d'enroulage 6 ou repris sur tout autre dispositif. Ainsi, il est possible de réaliser une enduction de certains supports relativement fragiles à la température, en particulier de tissés ou de non tisses, qui sont alors utilisables directement, sans nécessiter la mise en place préalable d'un produit thermocollant, ou encore un dépôt du produit thermocollant sur un support de transfert.

Du fait de la constitution modulaire du dispositif pour la mise en oeuvre du procédé conforme à l'invention, il est possible d'ajouter facilement en amont de la tête d'enduction constituée par la racle 7 et le cylindre gravé 2, ce moyen de déroulage complémentaire 16, qui permet une impression directe d'un support papier, textile ou autre, cette impression étant sous forme de grille, de points ou de tout autre motif géométrique.

Il est également possible de réaliser une impression par transfert à chaud sur des supports nécessitant une grande souplesse ou ayant des caractéristiques mécaniques ou thermiques incompatibles avec l'impression directe par le dispositif 7.

Le module d'enroulage 6 est constitué par deux cylindres tournants 13 sur lesquels s'appuie la bobine 14 d'enroulage du produit en forme de grille, des vérins 15 agissant sur une barre traversant le tube support de la bobine 14 pour l'appliquer sur lesdits cylindres 13.

Selon une variante de réalisation de l'invention, le produit thermocollant est déposé directement, sous forme de structure continue ou discontinue, sur un support d'utilisation finale.

Le traitement thermique prévu lors du procédé conforme à l'invention a pour but de stabiliser les importantes contraintes mécaniques subies par le produit lors de ses transferts, par un apport ponctuel de chaleur amenant le polymère constituant ledit produit dans une zone de température comprise entre le point de transition vitreuse et le point de fusion, le tac, qui interdirait l'enroulage, étant réduit par un refroidissement violent par soufflage d'air réfrigéré juste avant l'enroulage.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un produit thermocollant caractérisé en ce qu'il consiste essentiellement à extruder une masse thermofusible (1) et à la racler à l'état fondu sur un cylindre gravé (2) régulé en température entre environ 120°C et 250°C, à calandrer ladite masse (1) au moyen de ce cylindre (2) et d'un cylindre élastomérique de silicone (3), tout en la transférant sur ledit cylindre élastomérique (3), qui réalise simultanément une consolidation du produit (1) par refroidissement, à transférer ensuite le produit, soit sur une bande transporteuse (4) et à l'amener au moyen de cette dernière, après passage dans des zones de traitement thermique (5), à un module d'enroulage (6), soit directement, sous forme de structure continue ou discontinue, sur un support (17) d'utilisation finale ou de transfert.

2. Dispositif pour la mise en oeuvre du procédé suivant la revendication 1, caractérisé en ce qu'il est essentiellement constitué par un cylindre gravé (2) coopérant avec un cylindre élastomérique (3) de calandrage et de transfert, par une bande transporteuse (4), par un poste (5) de traitement thermique du produit et par un module d'enroulage (6).

3. Dispositif, suivant la revendication 2, caractérisé en ce que le polymère en fusion est réparti dans les gravures du cylindre (2) au moyen d'une racle (7) et le cylindre élastomérique (3) refroidi est monté sur un palier mobile (3') déplaçable sous l'action de vérins ou de dispositifs mécaniques à excentrique, ou autres dispositifs de réglage de position en direction du cylindre gravé (2), une hotte (8) surmontant l'ensemble et aspirant les vapeurs de polymères.

4. Dispositif, suivant la revendication 2, caractérisé en ce qu'au niveau du transfert entre le cylindre élastomérique (3) et la bande transporteuse (4) il est prévu, en outre, un cylindre (9) de léchage du cylindre élastomérique (3).

5. Dispositif, suivant l'une quelconque des revendications 2 et 4, caractérisé en ce que la bande transporteuse (4) est avantageusement pourvue d'un revêtement rugueux présentant des poils inclinés dans le sens de marche de la bande (4).

6. Dispositif, suivant la revendication 2, caractérisé en ce que le poste de traitement thermique (5) est constitué par un dispositif d'insolation à infrarouges (10) et par un ensemble (11) de ventilation refroidi au moyen d'une installation de circulation d'eau (12).

7. Dispositif, suivant l'une quelconque des revendications 2 à 6, caractérisé en ce que, dans le cas du transfert du produit directement sur un support d'utilisation finale ou de transfert, il est complété par un moyen de déroulage (16) monté en amont des cylindres (2 et 3) et déroulant un support (17) d'utilisation finale ou de transfert sous le cylindre élastomérique de silicone (3) en amont de la bande transporteuse (4), le support (17) ainsi chargé pouvant être enroulé sur le module d'enroulage (6) ou repris par tout autre dispositif.

8. Dispositif, suivant l'une quelconque des revendications 2 et 7, caractérisé en ce que le module d'enroulage (6) est constitué par deux cylindres tournants (13) sur lesquels s'appuie la bobine (14) d'enroulage du produit en forme de grille, des vérins (15) agissant sur une barre traversant le tube support de la bobine (14) pour l'appliquer sur lesdits cylindres (13).

## Claims

1. Process for producing a hot melt product, characterised in that it essentially involves extruding a hot-melting composition (1) and scraping it in the molten state over an engraved cylinder (2) regulated to a temperature of between about 120°C and 250°C, calendering said composition (1) by means of this cylinder (2) and an elastomeric cylinder of silicone (3) while transferring it onto said elastomeric cylinder (3) which simultaneously consolidates the product (1) by cooling, then transferring the product either onto a conveyor belt (4) and bringing it, by means of this conveyor belt, after passage through the heat treatment regions (5), to a winding module (6) or directly in the form of a continuous or discontinuous structure onto a support (17) for final use or for transfer.

2. Device for carrying out the process according to claim 1, characterised in that it essentially consists of an engraved cylinder (2) co-operating with an elastomeric calendering and transfer cylinder (3), a conveyor belt (4), a unit (5) for heat treatment of the product and a winding module (6).

3. Device according to claim 2, characterised in that the molten polymer is distributed in the engraving of the cylinder (2) by means of a scaper (7) and the cooled elastomeric cylinder (3) is mounted on a movable bearing (3') which is displaceable under the influence of jacks or mechanical devices equipped with cams or other devices for adjusting the position in the direction of the engraved cylinder (2), a hood (8) topping the assembly and aspiring the polymer vapour.

4. Device according to claim 2, characterised in that in the region of transfer between the elastomeric cylinder (3) and the conveyor belt (4) there is also provided a cylinder (9) for sweeping the elastomeric cylinder (3).

5. Device according to any one of claims 2 and 4, characterised in that the conveyor belt (4) is advantageously provided with a rough coating having hairs which are inclined in the direction of travel of the belt (4).

6. Device according to claim 2, characterised in that the heat treatment unit (5) consists of an infrared insolation device (10) and a ventilating assembly (11) which is cooled by means of a water circulating installation (12).

7. Device according to any one of claims 2 to 6, characterised in that, in the case where the product is transferred directly onto a support for final use or transfer, it is completed by an unwinding means (16) mounted upstream of the cylinders (2 and 3) and unwinding a support (17) for final use or transfer below the elastomeric cylinder of silicone (3) upstream of the conveyor belt (4), the support (17) loaded in this way being adapted to be wound onto the winding module (6) or to be taken up by any other device.

8. Device according to any one of claims 2 and 7, characterised in that the winding module (6) consists of two rotating cylinders (13) on which there rests the spool (14) for winding the product in the form of a grid, jacks (15) acting on a bar traversing the tube supporting the spool (14) and applying it to said cylinders (13).

## Patentansprüche

1. Verfahren zur Herstellung eines schmelzklebenden Produkts,
dadurch gekennzeichnet, daß es im wesentlichen daraus besteht, daß eine unter Hitze schmelzbare Masse (1) extrudiert wird und im geschmolzenen Zustand auf einen gravierten, auf eine Temperatur von zwischen etwa 120°C und 250°C geregelten Zylinder (2) gerakelt wird, daß die Masse (1) mittels dieses Zylinders (2) und eines elastomeren Zylinders (3) aus Silikon kalandriert wird, wobei sie auf den elastomeren Zylinder (3) übertragen wird, der gleichzeitig durch Kühlung eine Verfestigung des Produkts (1) bewirkt, um danach das Produkt über ein Transportband (4) zu übertragen und es mittels letzterem nach Durchgang von Bereichen thermischer Behandlung (5) einem Aufrollmechanismus (6) zuzuführen oder direkt in kontinuierlicher oder diskontinuierlicher Art auf einen Träger (17) zur endgültigen Benutzung oder Weiterleitung zu übertragen.

2. Vorrichtung zur Ausführung des Verfahrens nach Anspruch 1,
dadurch gekennzeichnet, daß sie im wesentlichen aus einem mit einem elastomeren Kalandrier- und Übertragungszylinder (3) zusammenwirkenden, gravierten Zylinder (2), einem Transportband (4), einer thermischen Behandlungsstation (5) für das Produkt und einem Aufrollmechanismus (6) besteht.

3. Vorrichtung nach Anspruch 2,
dadurch gekennzeichnet, daß das Schmelzpolymer mittels einer Rakel (7) in die Gravuren des Zylinders (2) verteilt wird und daß der gekühlte elastomere Zylinder (3) auf einem beweglichen, unter der Wirkung von Stellgliedern oder mechanischen Exzentervorrichtungen oder anderen Einstellvorrichtungen in Richtung des gravierten Zylinders (2) verschiebbaren Lager (3') angebracht ist, wobei ein Abzug (8) über der Anordnung angebracht ist und die Polymerdämpfe absaugt.

4. Vorrichtung nach Anspruch 2,
dadurch gekennzeichnet, daß in Hohe der Übertragung zwischen dem elastomeren Zylinder (3) und dem Transportband (4) weiterhin ein Bestreichzylinder (9) für den elastomeren Zylinder (3) vorgesehen ist.

5. Vorrichtung nach einem der Ansprüche 2 und 4,
dadurch gekennzeichnet, daß das Transportband (4) vorteilhafterweise mit einer rauhen Beschichtung versehen ist, welche in Bewegungsrichtung des Bands (4) schräge Noppen aufweist.

6. Vorrichtung nach Anspruch 2,
dadurch gekennzeichnet, daß die thermische Behandlungsstation (5) aus einer Infrarot-Bestrahlungsvorrichtung (10) und einer mittels einer Wasserumwälzeinrichtung (12) gekühlten Ventilationsanordnung (11) besteht.

7. Vorrichtung nach einem der Ansprüche 2 bis 6,
dadurch gekennzeichnet, daß im Fall der direkten Übertragung des Produkts auf einen Träger zur endgültigen Benutzung oder Weiterleitung ein Abrollmittel (16) vorgesehen ist, das vor den Zylindern (2 und 3) angebracht ist und einen Träger (17) zur endgültigen Benutzung oder Weiterleitung unter dem elastomeren Zylinder (3) aus Silikon vor dem Transportband (4) abrollt, wobei der auf diese Weise bedeckte Träger (17) auf den Aufrollmechanismus (6) aufgewickelt oder von irgendeiner anderen Vorrichtung aufgenommen werden kann.

8. Vorrichtung nach einem der Ansprüche 2 bis 7,
dadurch gekennzeichnet, daß der Aufrollmechanismus (6) aus zwei Drehzylindern (13) besteht, auf denen sich die Aufrollspule (14) für das Produkt in Form eines Gitters abstützt, wobei Stellglieder (15) auf einen Bolzen durch das Trägerrohr der Spule (14) wirken und sie somit an die Zylinder (13) anlegt.
